# EUROPEAN PATENT APPLICATION

(11) **EP 4 783 654 A1**
(43) Date of publication of application: **29.07.2026**
(21) Application number: 23952762.5
(22) Date of filing: 22.09.2023
(51) Int. Cl.: H04W 24/10

(54) **CSI TRANSMISSION METHOD, TERMINALS, NETWORK DEVICES, COMMUNICATION SYSTEM, AND STORAGE MEDIUM**

(71) Applicant: Beijing Xiaomi Mobile Software Co., Ltd., Beijing 100085 (CN)
(72) Inventor: LIU, Min, Beijing 100085 (CN); LIU, Zhengxuan, Beijing 100085 (CN)
(74) Representative: Dehns Germany Partnerschaft mbB
(86) International application number: PCT/CN2023/120889
(87) International publication number: WO 2025/060110

(57) **Abstract**

Provided in the embodiments of the present disclosure are a CSI transmission method, terminals, network devices, a communication system, and a storage medium. The method comprises: according to a first reference signal, a terminal sends first CSI to a network device, the first CSI at least comprising a precoding matrix code (PMC) and rank indication (RI) processed on the basis of a model; and, according to a second reference signal, the terminal sends second CSI to the network device, the second CSI at least comprising a channel quality indicator (CQI), and the time domain position of the second reference signal being later than the time domain position of the first reference signal. In the method of the present disclosure, the terminal reports the different CSI in two steps according to the two reference signals having different time domain positions, and the CQI reported by the terminal in the second step is directly related to the PMC decoded by the network device, and is closer to a decoding result of the network device, thereby effectively improving the accuracy of the reported CQI.

## Description

### TECHNICAL FIELD

The present disclosure relates to a field of communication technologies, and more particularly, to a method for transmitting CSI, a terminal, a network device, a communication system, and a storage medium.

### BACKGROUND

In Channel State Information (CSI) reporting, a terminal may obtain CSI which is measured based on a downlink reference signal sent by a network device, and report the obtained CSI to the network device according to reporting configuration of the network device. The CSI includes a Precoding Matrix Indicator (PMI), a rank indication (RI), and a Channel Quality Indicator (CQI).

### SUMMARY

In conventional CSI reporting, the terminal simultaneously reports PMI, RI, and CQI. In CSI compression based on artificial intelligence (AI) or machine learning (ML), if the terminal still simultaneously reports PMI, RI, and CQI, it may cause the CQI used by the network device to be inaccurate.

Embodiments of the present disclosure provide a method for transmitting CSI, a terminal, a network device, a communication system, and a storage medium.

In a first aspect, embodiments of the present disclosure provide method for reporting a channel state information CSI, the method includes:
sending, by a terminal, first CSI to a network device according to a first reference signal, where the first CSI at least includes a rank indication RI and a precoding matrix code (PMC) processed based on a model; and
sending, by the terminal, second CSI to the network device according to a second reference signal, where the second CSI at least includes a channel quality indicator CQI.

In a second aspect, embodiments of the present disclosure provide a method for receiving CSI, the method includes:
receiving, by a network device, first CSI sent by a terminal, where the first CSI at least includes an RI and a PMC processed based on a model; and
receiving, by the network device, second CSI sent by the terminal, where the second CSI at least includes CQI.

In a third aspect, embodiments of the present disclosure provide a terminal, including:
a transceiver module, configured to send first CSI to a network device according to a first reference signal, where the first CSI at least includes a rank indication RI and a precoding matrix code PMC processed based on a model;
the transceiver module is further configured to send second CSI to the network device according to a second reference signal, where the second CSI at least includes a channel quality indicator CQI.

In a fourth aspect, embodiments of the present disclosure provide a network device, including:
a transceiver module, configured to receive first CSI sent by a terminal, where the first CSI at least includes an RI and a PMC processed based on a model;
the transceiver module is further configured to receive second CSI sent by the terminal, where the second CSI at least includes CQI.

In a fifth aspect, embodiments of the present disclosure provide a terminal, including:
one or more processors;
where the terminal is configured to perform the method of the first aspect.

In a sixth aspect, embodiments of the present disclosure provide a network device, including:
one or more processors;
where the network device is configured to perform the method of the second aspect.

In a seventh aspect, embodiments of the present disclosure provide a communication system, including a terminal and a network device, where,
the terminal is configured to implement the method of the first aspect;
the network device is configured to implement the method of the second aspect.

In an eighth aspect, embodiments of the present disclosure provide a storage medium, where the storage medium stores instructions, where,
when the instructions are executed on a communication device, the communication device is configured to perform the method of the first aspect or the second aspect.

In the method of the present disclosure, the terminal reports different CSI in two steps according to two groups of reference signals with different time domain positions. The CQI reported by the terminal in the second step is directly related to the PMC decoded by the network device, is closer to the decoding result of the network device, which may effectively improve accuracy of the reported CQI.

### BRIEF DESCRIPTION OF THE DRAWINGS

In order to more clearly describe the technical solutions in the embodiments of the present disclosure, the drawings required for describing the embodiments are introduced below. The following drawings are merely some embodiments of the present disclosure and do not constitute specific limitations to the protection scope of the present disclosure.
FIG. 1 is an exemplary schematic diagram of an architecture of a communication system provided according to embodiments of the present disclosure;
FIG. 2 is an exemplary interaction schematic diagram of a method provided according to embodiments of the present disclosure;
FIG. 3a~3d are schematic flow diagrams of a method executed by a terminal provided according to embodiments of the present disclosure;
FIG. 4a~4d are schematic flow diagrams of a method executed by a network device provided according to embodiments of the present disclosure;
FIG. 5a is a schematic structural diagram of a terminal shown according to embodiments of the present disclosure;
FIG. 5b is a schematic structural diagram of a network device shown according to embodiments of the present disclosure;
FIG. 6a is a schematic diagram of a communication device shown according to embodiments of the present disclosure;
FIG. 6b is a schematic diagram of a communication device shown according to embodiments of the present disclosure.

### DETAILED DESCRIPTION

Embodiments of the present disclosure provide a method for transmitting channel state information (CSI), a terminal, a network device, a communication system, and a storage medium.

In a first aspect, embodiments of the present disclosure provide a method for reporting channel state information CSI, the method includes:
sending, by a terminal, first CSI to a network device according to a first reference signal, where the first CSI at least includes a precoding matrix code PMC processed based on a model and a rank indication RI; and
sending, by the terminal, second CSI to the network device according to a second reference signal, where the second CSI at least includes a channel quality indicator CQI, and a time domain position of the second reference signal is after a time domain position of the first reference signal.

In the above embodiments, the terminal reports different CSI in two steps according to two groups of reference signals with different time domain positions. The CQI reported by the terminal in the second step is directly related to the PMC decoded by the network device, is closer to a decoding result of the network device, so as to effectively improve accuracy of the reported CQI.

In combination with the embodiments of the first aspect, in some embodiments, the first CSI includes a first part and a second part, the first part includes the RI, and the second part includes the PMC.

In the above embodiments, the information of a first step of the terminal is further divided into two parts for reporting, which is beneficial for the terminal to perform reasonable capability reporting in combination with the two parts, or is beneficial for the network device to respectively perform reasonable configuration, such as overhead configuration, in combination with the two parts.

In combination with the embodiments of the first aspect, in some embodiments, the method further includes:
sending, by the terminal, capability information to the network device, where the capability information is configured to indicate a first overhead, and the first overhead is a payload (i.e., bit overhead) required to be occupied by the PMC corresponding to the RI.

In the above embodiments, the terminal sends the capability information to the network device to report the overhead required to be occupied by the PMC under different RI values of the terminal, such that the network device may obtain the first overhead, thereby facilitating reasonable overhead configuration.

In combination with the embodiments of the first aspect, in some embodiments, the capability information includes a model identifier of the model, and the model identifier has a corresponding relationship with the first overhead.

In the above embodiments, the terminal may report a corresponding first overhead by reporting the model identifier, such that the network device may obtain the first overhead required by the terminal according to the model identifier.

In combination with the embodiments of the first aspect, in some embodiments, the first part further includes an overhead identifier, where the overhead identifier has a corresponding relationship with the first overhead.

In the above embodiments, the terminal may report the overhead identifier in the first part to indicate the reported first overhead, such that the network device may obtain the first overhead required by the terminal according to the overhead identifier.

In combination with the embodiments of the first aspect, in some embodiments, the first overhead is a per-layer overhead, or the first overhead is a per-rank overhead.

In the above embodiments, the first overhead reported by the terminal may be reported per-layer, such that the network device may obtain a total overhead required by the terminal according to the RI in the first part and the reported first overhead; or the first overhead reported by the terminal is an overhead per-rank, such that the network device may perform reasonable overhead configuration according to the RI and the first overhead reported by the terminal, or overheads required by different ranks.

In combination with the embodiments of the first aspect, in some embodiments, the method further includes:
receiving, by the terminal, first configuration information sent by the network device, where the first configuration information is configured to indicate a second overhead, and the second overhead is a payload occupied by the PMC configured by the network device.

In the above embodiments, the terminal receives the first configuration information sent by the network device to obtain the second overhead configured by the network device, so as to facilitate the CSI reporting according to the second overhead.

In combination with the embodiments of the first aspect, in some embodiments, the first configuration information includes at least one model identifier, and the at least one model identifier is respectively configured with a corresponding second overhead.

In the above embodiments, in the configuration of the network device, different models may be configured with corresponding second overheads, so as to adapt to different reporting requirements of different terminals or different reporting requirements of the same terminal with different models.

In combination with the embodiments of the first aspect, in some embodiments, the second overhead is configured per-layer, or configured per-rank.

In the above embodiments, the terminal may obtain a corresponding total reporting overhead according to the second overhead configured per-layer, or obtain reporting overheads available under different ranks according to the second overhead configured per-rank.

In combination with the embodiments of the first aspect, in some embodiments, the first CSI includes first indication information and second indication information, the first indication information is configured to indicate a quantity of non-zero values in the PMC; and the second indication information is configured to indicate positions of the non-zero values.

In the above embodiments, the terminal may indicate a quantity of non-zero values in the second part through the first indication information, and indicate positions of the non-zero values through the second indication information, thereby saving information reported by the terminal, and facilitating efficient demodulation of the non-zero values by the network device.

In combination with the embodiments of the first aspect, in some embodiments, the method further includes:
receiving, by the terminal, second configuration information sent by the network device, where the second configuration information is used to configure an uplink resource of the terminal, and the uplink resource is used to transmit the first part and/or the second part.

In some embodiments, the uplink resource is further configured to indicate a third overhead for transmitting the first part and/or the second part. The terminal may obtain a time-frequency position of the uplink resource through the second configuration information, and a size of an available uplink resource, i.e., a size of reporting overhead, that is, the third overhead, may be calculated according to the time-frequency position.

In the above embodiments, the terminal transmits the first part and/or the second part by using the appropriate uplink resource according to the second configuration information sent by the network device, and may obtain an actually available reporting overhead of the current reporting.

In combination with the embodiments of the first aspect, in some embodiments, the first part and the second part are independently encoded.

In the above embodiments, overheads of the first part and the second part may be different, and the two are independently encoded, so as to facilitate the network device to respectively decode the two parts to respectively obtain the information of the two parts.

In combination with the embodiments of the first aspect, in some embodiments, a time domain position of the first part and a time domain position of the second part on the uplink resource are determined according to a mapping rule.

In the above embodiments, the terminal reports the first part or the second part at a reasonable position, such that the network device may accurately demodulate at a corresponding position, thereby improving processing efficiency.

In combination with the embodiments of the first aspect, in some embodiments, an uplink resource for transmitting the first part includes a physical uplink control channel PUCCH or a physical uplink shared channel PUSCH, and an uplink resource for transmitting the second part includes the PUSCH.

In the above embodiments, overheads required by the first part and the second part are different, and the same or different uplink resources may be used for transmission, which facilitates efficient transmission of information with different overheads.

In combination with the embodiments of the first aspect, in some embodiments, a priority of the first part is higher than a priority of the second part.

In the above embodiments, priorities of the two parts may be defined by a protocol, so as to facilitate the terminal to perform reporting with reference to the defined priorities during reporting.

In combination with the embodiments of the first aspect, in some embodiments, the first part is sent periodically or semi-statically;
the second part is sent semi-statically or aperiodically.

In the above embodiments, appropriate transmission manners are adopted to transmit the two parts of information so as to adapt to different overheads of the first part and the second part.

In combination with the embodiments of the first aspect, in some embodiments, the PMC includes at least one of:
feature vector information;
precoding matrix information; or
codebook indication information based on a specific codebook.

In the above embodiments, contents of the PMC reported by the terminal are illustrated, such that the network device may obtain a corresponding PMC after demodulating the CSI reported by the terminal.

In a second aspect, the embodiments of the present disclosure provide a method for receiving CSI, the method includes:
receiving, by a network device, first CSI sent by a terminal, where the first CSI at least includes a PMC processed based on a model and a rank indication RI; and
receiving, by the network device, second CSI sent by the terminal, where the second CSI at least includes a CQI, and a time domain position of the second reference signal is after a time domain position of the first reference signal.

In the above embodiments, the network device receives CSI reported by the terminal in two steps according to two groups of reference signals, where the CQI reported by the terminal in the second step is directly related to the PMC decoded by the network device, is closer to a decoding result of the network device, so as to effectively improve accuracy of the reported CQI.

In combination with the embodiments of the second aspect, in some embodiments, the first CSI includes a first part and a second part, the first part includes the RI, and the second part includes the PMC.

In combination with the embodiments of the second aspect, in some embodiments, the method further includes:
receiving, by the network device, capability information sent by the terminal, where the capability information is configured to indicate a first overhead, and the first overhead is a payload required to be occupied by the PMC corresponding to the RI.

In combination with the embodiments of the second aspect, in some embodiments, the capability information includes a model identifier of the model, and the model identifier has a corresponding relationship with the first overhead.

In combination with the embodiments of the second aspect, in some embodiments, the first part further includes an overhead identifier, where the overhead identifier has a corresponding relationship with the first overhead.

In combination with the embodiments of the second aspect, in some embodiments, the first overhead is a per-layer overhead, or the first overhead is a per-rank overhead.

In combination with the embodiments of the second aspect, in some embodiments, the method further includes:
sending, by the network device, first configuration information to the terminal, where the first configuration information is configured to indicate a second overhead, and the second overhead is a payload occupied by the PMC configured by the network device.

In combination with the embodiments of the second aspect, in some embodiments, the first configuration information includes at least one model identifier, and the at least one model identifier is respectively configured with a corresponding second overhead.

In combination with the embodiments of the second aspect, in some embodiments, the second overhead is configured per-layer, or configured per-rank.

In combination with the embodiments of the second aspect, in some embodiments, the first CSI includes first indication information and second indication information, the first indication information is configured to indicate a quantity of non-zero values in the PMC; and the second indication information is configured to indicate positions of the non-zero values.

In combination with the embodiments of the second aspect, in some embodiments, the method further includes:
sending, by the network device, second configuration information to the terminal, where the second configuration information is configured to configure an uplink resource of the terminal, which is configured for transmitting the first part and/or the second part.

In some embodiments, the uplink resource is further configured to indicate a third overhead for transmitting the first part and/or the second part.

In combination with the embodiments of the second aspect, in some embodiments, the first part and the second part are independently decoded.

In combination with the embodiments of the second aspect, in some embodiments, a time domain position of the first part and a time domain position of the second part on an uplink resource are determined according to a mapping rule.

In combination with the embodiments of the second aspect, in some embodiments, an uplink resource for transmitting the first part includes a physical uplink control channel PUCCH or a physical uplink shared channel PUSCH, and an uplink resource for transmitting the second part includes the PUSCH.

In combination with the embodiments of the second aspect, in some embodiments, a priority of the first part is higher than a priority of the second part.

In combination with the embodiments of the second aspect, in some embodiments, the first part is periodic or semi-static;
the second part is semi-static or aperiodic.

In combination with the embodiments of the second aspect, in some embodiments, the PMC includes at least one of:
feature vector information;
precoding matrix information; or
codebook indication information based on a specific codebook.

In a third aspect, the embodiments of the present disclosure provide a terminal, and the terminal includes:
a transceiver module, configured to send first CSI to a network device according to a first reference signal, where the first CSI at least includes a precoding matrix code PMC processed based on a model and a rank indication RI;
and the transceiver module is further configured to send second CSI to the network device according to a second reference signal, where the second CSI at least includes a channel quality indicator CQI, and a time domain position of the second reference signal is after a time domain position of the first reference signal.

In a fourth aspect, the embodiments of the present disclosure provide a network device, and the network device includes:
a transceiver module, configured to receive first CSI sent by a terminal, where the first CSI at least includes a PMC processed based on a model and a rank indication RI; and
the transceiver module is further configured to receive second CSI sent by the terminal, where the second CSI at least includes a CQI, and a time domain position of the second reference signal is after a time domain position of the first reference signal.

In a fifth aspect, the embodiments of the present disclosure provide a terminal, and the terminal includes:
one or more processors;
where the terminal is configured to perform the method according to the first aspect.

In a sixth aspect, the embodiments of the present disclosure provide a network device, including:
one or more processors;
where the network device is configured to perform the method according to the second aspect.

In a seventh aspect, the embodiments of the present disclosure provide a communication system, including a terminal and a network device,
the terminal is configured to implement the method according to the first aspect; and
the network device is configured to implement the method according to the second aspect.

In an eighth aspect, the embodiments of the present disclosure provide a storage medium, where the storage medium stores instructions,
when the instructions are executed on a communication device, the communication device is caused to perform the method according to the first aspect or the second aspect.

In a ninth aspect, the embodiments of the present disclosure provide a program product, where when the program product is executed by a communication device, the communication device is caused to perform the method described in the optional implementations of the first aspect and the second aspect.

In a tenth aspect, the embodiments of the present disclosure provide a computer program, where when the computer program runs on a computer, the computer is caused to perform the method described in the optional implementations of the first aspect and the second aspect.

In an eleventh aspect, the embodiments of the present disclosure provide a chip or a chip system. The chip or chip system includes a processing circuit configured to perform the method described according to the optional implementations of the first aspect and the second aspect.

It may be understood that the above terminal, network device, communication system, storage medium, program product, computer program, chip or chip system are all used to perform the method proposed in the embodiments of the present disclosure. Therefore, beneficial effects that may be achieved thereby may refer to beneficial effects in the corresponding method, and details are not repeated herein.

The embodiments of the present disclosure provide a method for transmitting CSI, a terminal, a network device, a communication system, and a storage medium.

The embodiments disclosed herein are not exhaustive, but merely illustrative of some embodiments, and are not intended to limit the scope of protection of this disclosure. Where there is no contradiction, each step in a particular embodiment may be implemented as an independent embodiment, and the steps may be arbitrarily combined. For example, a solution that removes some steps in a particular embodiment may also be implemented as an independent embodiment, and the order of the steps in that embodiment may be arbitrarily changed. Furthermore, the optional implementation manners in a particular embodiment may be arbitrarily combined; moreover, various embodiments may be arbitrarily combined. For example, some or all steps of different embodiments may be arbitrarily combined, and one embodiment may be arbitrarily combined with alternative implementation manners of other embodiments.

In the various embodiments of this disclosure, the terminology and/or descriptions between embodiments may be consistent, may be referenced to each other in the absence of specific descriptions and logical conflicts, and technical features in different embodiments may be combined according to their inherent logical relationships to form new embodiments.

Terms used in embodiments of this disclosure are for the purpose of describing particular embodiments only and is not intended to limit this disclosure.

In some embodiments of the disclosure, unless otherwise stated, elements expressed in the singular form, such as "a", "an", "the", "the aforementioned", "the", "this", etc., may mean "one and only one", or "one or more", "at least one", etc. For example, when using articles such as "a", "an", "the", etc. in translation, the noun following the article may be understood as either a singular or a plural expression.

In embodiments of this disclosure, "a plurality of / multiple" refers to two or more.

In some embodiments, "at least one (at least one item, at least one of)", "one or more", "a plurality of" and "multiple" may be used interchangeably.

In some embodiments, phrases such as "at least one of A or B", "A and/or B", "A in one case and B in another", and "in response to one case A and in response to another case B" may include the following technical solutions depending on the situation. In some embodiments, A (A is executed independently of B); in some embodiments, B (B is performed independently of A); in some embodiments, execution is selected from A and B (A and B are selectively executed); in some embodiments, A and B (both A and B are performed). The same applies when there are many branches such as A, B, and C.

In some embodiments, the "A or B" may include the following technical solutions depending on the situation. In some embodiments, A (A is performed independently of B); in some embodiments, B (B is performed independently of A); in some embodiments, execution is selected from A and B (A and B are selectively executed). The same applies when there are many branches such as A, B, and C.

In some embodiments of the disclosure, prefixes such as "first" and "second" are used only to distinguish different descriptive objects and do not limit the position, order, priority, quantity, or content of different descriptive objects. The description of the descriptive objects refers to the context of the claims or embodiments and should not be unduly limited by the use of prefixes. For example, if the descriptive object is a "field", the ordinal numbers preceding "field" in "first field" and "second field" do not restrict the position or order of the "fields", and "first" and "second" do not restrict whether their modified "fields" are in the same message. The order of "first field" and "second field" is unrestricted. As another example, if the descriptive object is "rank", the ordinal numbers preceding "rank" in "first rank" and "second rank" do not restrict the priority between "ranks". For example, the number of described objects is not limited by ordinal numbers and may be one or more. For example, the number of "devices" in "first device" may be one or more. In addition, objects modified by different prefixes may be the same or different. For example, if the object being described is "device", then "first device" and "second device" may be the same device or different devices, and their types may be the same or different. If the object being described is "information", then "first information" and "second information" may be the same information or different information, and their content may be the same or different.

In some embodiments, "including A", "containing A", "for indicating A", and "carrying A", may be interpreted as directly carrying A or indirectly indicating A.

In some embodiments, terms such as "time-frequency (time/frequency)" and "time-frequency domain" refer to a time domain and/or a frequency domain.

In some embodiments, terms such as "in response to", "in response to determination of", "in the case of", "when", "while", "at that time", "in case", "if", etc., may be replaced by each other.

In some embodiments, the terms "greater than", "greater than or equal to", "not less than", "more than", "more than or equal to", "no less than", "higher than", "higher than or equal to", "not lower than", and "above" may be used interchangeably. Similarly, the terms "less than", "less than or equal to", "not greater than", "fewer than", "fewer than or equal to", "no more than", "lower than", "lower than or equal to", "not higher than", and "below" may be used interchangeably.

In some embodiments, the terms "apparatus" and "device" may be interpreted as either physical or virtual, and their names are not limited to those recorded in the embodiments. In some cases, they may also be understood as "equipment", "device", "circuit", "network element", "node", "function", "unit", "section", "system", "network", "chip", "chip system", "entity", "subject", etc.

In some embodiments, "network" may be interpreted as the devices included in the network, such as access network devices, core network devices, etc.

In some embodiments, the terms such as "access network device (AN device) ", "radio access network device (RAN device) ", "base station (BS)", "wireless base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", and the like, may be used interchangeably.

In some embodiments, the terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, and the like, may be used interchangeably.

In some embodiments, an access network device, a core network device, or a network device may be replaced by a terminal. For example, in a structure where communication between an access network device, a core network device, or a network device and a terminal is replaced by communication among multiple terminals (such as device-to-device (D2D), vehicle-to-everything (V2X), etc.), the embodiments of the present disclosure may also be applied. In this case, it may also be set that the terminal has all or part of the functions of an access network device. Additionally, the term like "uplink" and "downlink" may be replaced by the term corresponding to terminal-to-terminal communication (e.g., "side"). For example, an uplink channel and a downlink channel may be replaced with a sidelink channel, and an uplink link and a downlink link may be replaced with a sidelink link.

In some embodiments, the terminal may be replaced by an access network device, a core network device, or a network device. In this case, it may also be set that the access network device, the core network device, or the network device has a structure having all or part of functions of the terminal.

In some embodiments, obtaining data, information, etc. shall comply with the laws and regulations of the country where it is located.

In some embodiments, data, information, etc. may be obtained after obtaining the user's consent.

Additionally, each element, each row, or each column in the tables of the embodiments disclosed herein may be implemented as an independent embodiment, and any combination of elements, rows, or columns may also be implemented as an independent embodiment.

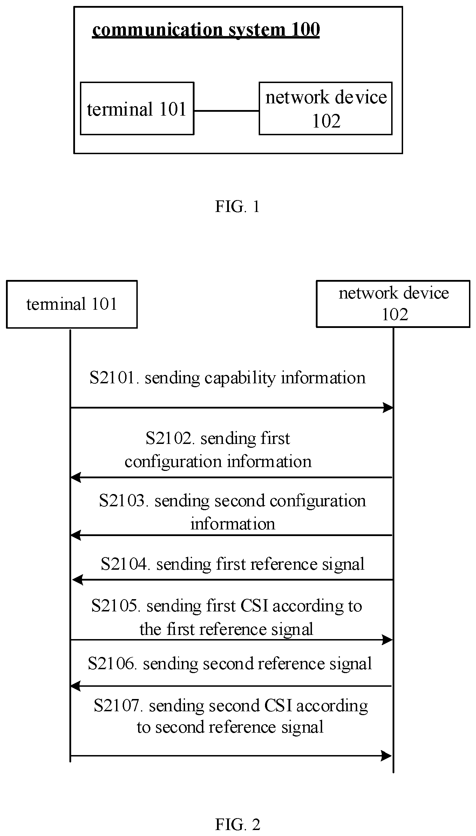

FIG. 1 is a schematic diagram of the architecture of a communication system according to an embodiment of the present disclosure.

As shown in FIG. 1, the communication system 100 includes a terminal 101 and a network device 102.

In some embodiments, the terminal 101 may include, for example, a mobile phone, wearable device, Internet of Things (IoT) device, vehicle with communication capabilities, smart car, tablet (Pad), computer with wireless transceiver function, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home, but is not limited to these.

In some embodiments, the network device 102 may include at least one of an access network device, or a core network device.

In some embodiments, the access network device is, for example, a node or device that connects a terminal to a wireless network. The access network device may include at least one of an evolved Node B (eNB) in a 5G communication system, a next-generation eNB (ng-eNB), a next-generation Node B (gNB), a Node B (NB), a Home Node B (HNB), a Home eNB (HeNB), a radio backhaul device, a radio network controller (RNC), a base station transceiver station (BTS), a baseband unit (BBU), a mobile switching center, a base station in a 6G communication system, an OpenRAN, a CloudRAN, a base station in other communication systems, or an access node in a wireless fidelity (Wi-Fi) system, but is not limited to these.

In some embodiments, the technical solutions disclosed herein may be applied to the OpenRAN architecture. In such cases, the interfaces between or within the access network devices involved in the embodiments of the present disclosure may be transformed into internal interfaces of OpenRAN. The processes and information exchanges between these internal interfaces may be implemented through software or programs.

In some embodiments, the access network device may be composed of a central unit (CU) and a distributed unit (DU), where the CU may also be referred to as a control unit. The CU-DU structure may separate the protocol layers of the access network device, with the functions of some protocol layers being centralized in the CU for control, and the remaining or all protocol layers' functions being distributed in the DU and controlled by the CU, but not limited to this.

In some embodiments, the core network device may be a single device including one or more network elements, or it may be multiple devices or device clusters, each including all or part of the one or more network elements. The network elements may be virtual or physical. The core network, for example, includes at least one of the Evolved Packet Core (EPC), 5G Core Network (5GCN), and Next Generation Core (NGC).

It is understandable that the communication system described in the embodiments of the present disclosure is for a clearer illustration of the technical solutions provided by the embodiments of the present disclosure and does not constitute a limitation on the technical solutions provided by the embodiments of the present disclosure. As is known to those of ordinary skill in the art, with the evolution of system architectures and the emergence of new business scenarios, the technical solutions provided by the embodiments of the present disclosure are also applicable to similar technical problems.

The following embodiments of the present disclosure may be applied to the communication system 100 shown in FIG. 1 or to some of its components, but are not limited to this. The various entities shown in FIG. 1 are illustrative. The communication system may include all or some of the entities in FIG. 1, or may include other entities not shown in FIG. 1. The number and form of each entity are arbitrary. The connection relationships among the entities shown are illustrative. The entities may or may not be connected to each other, and their connections may be in any form, either direct or indirect, wired or wireless.

The various embodiments of the present disclosure may be applied to Long Term Evolution (LTE), LTE-Advanced (LTE-A), LTE-Beyond (LTE-B), SUPER3G, IMT-Advanced, 4th generation mobile communication system (4G), 5th generation mobile communication system (5G), 5G New Radio (NR), Future Radio Access (FRA), New Radio Access Technology (RAT), New Radio (NR), New Radio Access (NX), Future Generation Radio Access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X), systems using other communication methods, and next-generation systems expanded based on them. In addition, multiple systems may also be combined (for example, the combination of LTE or LTE-A and 5G, etc.) for an application.

In the embodiments of the present disclosure, in CSI compression based on AI/ML, an encoder based on an AI/ML model for encoding is deployed in the terminal 101. After measuring CSI, the terminal 101 performs the encoding compression on the CSI through the AI/ML model, processes the encoded and compressed CSI, such as quantization, and then reports it to the network device 102. The network device 102 needs to use a decoder to decode and recover the CSI. If the terminal still reports PMI, RI, and CQI simultaneously, the PMI reported by terminal 101 may not be identical to the PMI decoded by network device 102, and when the network device 102 uses the precoding matrix derived from the decoded result to precode the signal and obtain an equivalent channel, a channel quality of the equivalent channel is different from the report of terminal 101, leading to inaccuracies in the modulation and coding scheme (MCS) and coding efficiency (coder rate) determined by the network device based on the reported result.

In the embodiments of the present disclosure, when solving the problem of inaccurate MCS or coding rate, a manner in which the terminal reports CSI by using a new manner also needs to be provided. For example, in two-step (2-step) CSI reporting in the embodiments of the present disclosure, since a quantity of feature vectors of a channel, or a rank value, is uncertain, and the network device 102 needs to determine overhead of a subsequent feature vector according to the RI value, it may be seen that a specific reporting manner and resource allocation in two-step CSI reporting also need to be determined.

FIG. 2 is an interaction schematic diagram of a method for transmitting CSI according to the embodiments of the present disclosure. As shown in FIG. 2, the embodiments of the present disclosure relate to a method for transmitting CSI, and the method includes:
step S2101: the terminal 101 sends capability information to the network device 102.

In some embodiments, the capability information (UE capability information) is configured to indicate a first overhead, and the first overhead is a payload (i.e., a bit overhead) required to be occupied by the PMC corresponding to the RI.

Optionally, the RI is configured to indicate a quantity of ranks to be transmitted, and a value of the rank represents a quantity of layers. For example, when rank=2, two layers are included, namely layer 1 and layer 2. It may be understood that, in a MIMO scenario, spatial resources may be divided into different layers, and different signals are transmitted on different layers, so as to implement spatial division multiplexing.

Optionally, in AI-based CSI compression, the terminal 101 may support a plurality of AI-based models. Each model, according to compression characteristics, may include, but is not limited to, a layer-common model and a rank-common model; or a layer-common model and a rank-specific model; or a layer-specific model; or a rank-specific model. The layer-common model indicates that at least one layer shares one model, the rank-common model indicates that at least one rank shares one model, the rank-specific model indicates a rank-based model (rank based model), and the layer-specific model indicates a layer-based model (layer based model). Optionally, each model may support one or a plurality of ranks.

According to different AI models, the terminal 101 may compress for each layer or may compress directly for each rank. For example, for a rank adaptive system, according to different channel conditions, the terminal 101 may select rank=2 at time #1, and select rank=1 at time #2. The compression may be performed with reference to the following two examples.

In an example, if a rank-based model, also referred to as per rank, is used, at time #1 the terminal 101 determines RI=2, and the terminal 101 compresses CSI layer 1 on layer 1 (for example, a first feature vector) and CSI layer 2 on layer 2 (for example, a second feature vector) together, and outputs the compressed results of feature vectors corresponding to layer 1 and layer 2. At time #2, the terminal 101 determines RI=1, and directly compresses CSI layer 1 on layer 1 (for example, the first feature vector), and outputs a compressed result of the feature vector for layer 1.

In another example, if a layer-based model, also referred to as per layer, is used, at time #1 the terminal 101 determines RI=2, and the terminal 101 respectively compresses CSI layer 1 on layer 1 (for example, the first feature vector) and CSI layer 2 on layer 2 (for example, the second feature vector), and respectively outputs a compressed result of the feature vector for layer 1 and a compressed result of the feature vector for layer 2. At time #2 the terminal 101 determines RI=1, and the terminal 101 compresses CSI layer 1 on layer 1 (for example, the first feature vector), and outputs a compressed result of the feature vector for layer 1.

It may be seen that, when models are different or when the RIs under the same model are different, AI-based compression results of the terminal 101 may be different, and overheads required for reporting may be different.

In some embodiments, when the terminal 101 reports different RIs, the terminal 101 may report the overhead required for reporting the CSI, such as the first overhead required for reporting the PMC.

Optionally, the PMC is channel information that is measured by the terminal 101 according to a downlink reference signal sent by the network device 102, and is obtained after performing AI-based compression and quantization on a measurement result (such as CSI).

Optionally, the first overhead is a per-layer overhead, or the first overhead is a per-rank overhead.

In some embodiments, the capability information includes a model identifier (model ID) of the model, and the model identifier has a corresponding relationship or a mapping relationship with the first overhead.

Optionally, the network device 102 may obtain, based on the model identifier reported by the terminal 101, a per-layer first overhead or a per-rank first overhead corresponding to the model identifier. On the basis of obtaining the RI, in combination with compression manners of the rank-based model and the layer-based model in the foregoing embodiments, the network device 102 may obtain reporting overhead required by the terminal 101for reporting the PMC.

Optionally, when models used by the terminal 101 are different, that is, when model identifiers are different, the overhead of each layer or each rank under the corresponding model may be different. For a certain model, each layer may correspond to a plurality of first overheads, which are indicated by different overhead identifiers.

In some embodiments, the capability information may be reported in a two-step CSI reporting scenario. In combination with the description of the following embodiments, the two-step CSI reporting may be, for example, that the terminal 101 first reports first CSI (including PMC and RI) according to a first reference signal, and then reports second CSI (including CQI) according to a second reference signal.

Optionally, the PMC includes at least one of:
feature vector information;
precoding matrix information; or
codebook indication information based on a specific codebook.

Optionally, the network device 102 receives the capability information to obtain the reporting overhead required by the terminal 101 in the two-step CSI reporting.
step S2102: the network device 102 sends first configuration information to the terminal 101.

In some embodiments, the first configuration information is configured to indicate a second overhead, and the second overhead is a payload occupied by the PMC configured by the network device 102.

Optionally, the network device 102 may determine the first configuration information according to the capability information reported by the terminal 101; or, when step S2101 is omitted, the network device 102 may directly determine and send the first configuration information for the terminal 102.

Optionally, the second overhead configured by the network device 102 may be configured per-layer, or configured per-rank. For example, if the second overhead is configured for each layer corresponding to a model of the terminal 101, when there are a plurality of layers, a single second overhead may be configured to apply to a plurality of layers, or a plurality of different second overheads may be configured. Similarly, if the second overhead is configured for each rank corresponding to the model of the terminal 101, a plurality of second overheads may be configured when there are a plurality of ranks.

In an example, if the configuration is per-layer, that is, a second overhead corresponding to each layer is X, then a corresponding total overhead is (RI*X). For another example, if the configuration is per-rank, when the rank is 1, the second overhead is X, and when the rank is 2, the second overhead is Y, .... and thus, after the network device 102 obtains the RI reported by the terminal 101, the network device 102 may obtain or configure a corresponding PMC overhead.

Optionally, in AI-based CSI compression, if the terminal 101 directly reports compressed and quantized information without performing other processing on the compressed and quantized information, the second overhead configured by the network device 102 is used to indicate overhead of the compressed and quantized information of the terminal 101.

If the terminal 101 needs to perform other processing on the compressed and quantized information and then report the information, for example, if the terminal only reports information of non-zero value therein, the terminal 101 may not need to fully occupy the second overhead configured by the network device 102 during reporting. For example, if the second overhead configured by the network device 102 is 10 bits, that is, the quantity of non-zero bits is at most 10, an overhead actually occupied by the terminal 101 during reporting may be less than 10, for example, the quantity of non-zero bits actually reported is only 4.

It may be understood that a specific reporting manner and reporting information of the terminal 101 may be determined in combination with the description of the following embodiments.

In some embodiments, the first configuration information includes at least one model identifier, and the at least one model identifier is respectively configured with a corresponding second overhead.

Optionally, the network device 102 may indicate the second overhead through the model identifier in the first configuration information. A plurality of model identifiers may correspond to a plurality of second overheads one to one.

Optionally, in combination with the description of the foregoing embodiments, the model identifier has a corresponding first overhead and a corresponding second overhead.

Optionally, similar to the first overhead, different second overheads may also be distinguished by overhead identifiers. For example, the same overhead identifier has a corresponding first overhead and a corresponding second overhead.

In some embodiments, the network device 102 may further configure only one second overhead through the first configuration information, which is applicable to a scenario with different ranks.

In some embodiments, the second overhead may be the same as or different from the corresponding first overhead. For example, the first overhead reported by the terminal 101 is reported per-rank, for example, the first overhead reported for rank=1 is x, and the first overhead reported for rank=2 is y. The network device 102 performs configuration per-rank, for example, the second overhead configured for rank=1 is x', and the second overhead configured for rank=2 is y', then the first overhead x corresponds to the second overhead x', and the first overhead y corresponds to the second overhead y'.

In some embodiments, the terminal 101 receives the first configuration information sent by the network device 102 to obtain the second overhead during a CSI reporting process.
step S2103: the network device 102 sends second configuration information to the terminal 101.

In some embodiments, the second configuration information is used to configure an uplink resource of the terminal, and the uplink resource is configured to transmit a first part (part 1) and/or a second part (part 2) of the first CSI.

In some embodiments, the uplink resource is further configured to indicate a third overhead for transmitting the first part and/or the second part. For example, the third overhead is configured to indicate a total overhead actually occupied by the first part and the second part, or the third overhead is configured to indicate a total overhead actually occupied by the second part, or the third overhead is configured to indicate a total overhead actually occupied by the first part.

In some embodiments, the uplink resource includes a channel resource, for example, including a physical uplink control channel (PUCCH) and a physical uplink shared channel (PUSCH).

Optionally, the PUCCH or the PUSCH is configured to transmit the first part, and the PUSCH is configured to transmit the second part.

In some embodiments, the second configuration information may configure a time-frequency position of the uplink resource. The terminal 101 may obtain the time-frequency position of the uplink resource according to the second configuration information, and calculate the third overhead according to the time-frequency position, that is, a size of an actually available reporting overhead of the uplink resource. That is, the second configuration information may implicitly indicate the third overhead.

In some embodiments, the third overhead is configured to indicate a total overhead that the terminal 101, configured by the network device 102, may actually occupy when performing the reporting.

Optionally, in a scenario in which a second overhead is configured for each layer or each rank, a plurality of second overheads are involved. That is, the network device 102 may configure a plurality of second overheads to apply to different layers or ranks. In this embodiment, the network device 102 may configure only one third overhead to guide the terminal 101 to perform the total overhead for this reporting.

In an example, the third overhead may be one of the plurality of second overheads. For example, the network device 101 configures two second overheads, which are respectively the second overhead when rank=1 and the second overhead when rank=2. The third overhead may be configured as the second overhead when rank=2.

In another example, the third overhead is not a value among the plurality of second overheads.

Optionally, the network device 102 may reconfigure an appropriate third overhead in each reporting scenario of the terminal 101, so as to overcome a problem of uncertainty of channel characteristics in each reporting. For example, when rank=2, the second overhead is 120 bits. The second overhead of rank=2 may be configured per-rank (in other examples, it may also be configured per-layer, for example, when configured per-layer, the second overhead of each layer is configured as 60 bits). When rank=4, the second overhead is configured as 240 bits. When the network device 102 configures the third overhead, if the third overhead configured by the network device 102 each time is 240 bits, resource waste is caused; and if the third overhead configured each time is 100 bits, when the quantity of ranks is large, reported information is insufficient.

In this embodiment, the network device 102 may configure, through the second configuration information, the third overhead that may actually be used for the current reporting in each reporting scenario. The terminal 101, according to the third overhead, may occupy an overhead that is less than or equal to the third overhead when performing the actual reporting.

For example, the third overhead configured by the network device 102 is 200 bits, and the terminal 101 determines overhead required to be used according to the second overhead corresponding to each rank configured by the network device 102. For example, when rank=2 for a measured channel matrix (H), the corresponding second overhead is 120 bits, and therefore the terminal 101 may use 120 bits among the 200 bits to perform the reporting in this reporting.

For another example, the third overhead configured by the network device 102 is 200 bits, and the terminal 101 determines overhead required to be used according to the second overhead corresponding to each rank configured by the network device 102. For example, when rank=4 for the measured channel matrix (H), the corresponding second overhead is 240 bits, and therefore the terminal 101 may discard 240 bits according to a predefined rule so as to perform the reporting by using 200 bits.

For another example, the third overhead configured by the network device 102 is 150 bits. The terminal 101, according to the second overhead of 60 bits for each layer configured by the network device 102, determines that 120 bits are required to be occupied when RI=2. In this case, the terminal 101 may occupy 120 bits among the 150 bits to perform the reporting. The terminal 101 determines, according to the second overhead of 60 bits for each layer configured by the network device 102, that 180 bits are required to be occupied when RI=3. In this case, the terminal 101 needs to discard 30 bits (for example, discarding bit information of a certain layer), so as to perform the reporting using the 150 bits.

In some embodiments, the terminal 101 receives the second configuration information sent by the network device 102, to obtain an uplink resource during the CSI reporting process.
step S2104: the network device 102 sends a first reference signal to the terminal 101.

In some embodiments, the first reference signal may be a channel state information reference signal (CSI-RS). The first reference signal may also be referred to as a first-step reference signal or a 1^{st} reference signal.
step S2105: the terminal 101 sends first CSI to the network device 102 according to the first reference signal.

In some embodiments, the first CSI at least includes a precoding matrix code PMC processed based on a model and a rank indication RI.

In some embodiments, the terminal 101 uses a two-step CSI reporting manner based on an indication or configuration from network device 102, to perform measurement on the received first reference signal, so as to obtain a measurement result, the terminal performs AI-based compression and quantization on the measurement result to obtain quantized channel information, that is, the PMC. Optionally, the RI may be determined according to the PMC.

In some embodiments, the reporting of the first CSI is a first-step reporting in a two-step CSI reporting manner.

In some embodiments, the first CSI includes a first part (part 1) and a second part (part 2), the first part includes RI, and the second part includes PMC.

Optionally, the terminal 101 may obtain, according to the first configuration information of the network device 102, a payload that may be used for reporting the first CSI, that is, the first-step reporting.

Optionally, the terminal 101 may obtain, according to the second configuration information of the network device 102, a reporting resource or a reporting manner for the first CSI, that is, the first-step reporting.

In some embodiments, the first part may include only RI, and the network device 102 may obtain, according to the RI in combination with the capability information reported by the terminal 101, overhead required for the terminal 101 to report the PMC. Reference may be made to the description of the foregoing embodiments.

In some embodiments, the first part further includes an overhead size identifier (payload size ID), that is, the first part includes RI and the overhead size identifier. The overhead size identifier has a corresponding relationship or a mapping relationship with the first overhead corresponding to the PMC.

In combination with the description of the foregoing embodiments, when models used by the terminal 101 are different, that is, when model identifiers are different, overhead of each layer or each rank under the corresponding model may be different. In an example, for a certain model, each layer may correspond to a plurality of first overheads, which are indicated by different overhead identifiers. For example, a first overhead of the layer overhead identifier payload ID#1 is X, and a first overhead of the layer overhead identifier payload ID#2 is Y, and in this case, the terminal 101 reports the overhead identifiers, which helps that the network device 101 determines a corresponding overhead on the basis of obtaining the RI.

Optionally, in AI-based CSI compression, according to different compression ratios, the same input information dimension may have different output dimensions, and after quantization, different output overheads are generated. Generally, the larger the output overhead is, the higher similarity of the PMC restored by the network device 102 is. Therefore, a plurality of first overheads may be set or defined for each layer or each rank to adapt to different scenarios. For example, when accuracy of data restored by the network device 102 needs to be ensured, the terminal 101 may report a larger first overhead; and in a scenario where overhead needs to be controlled, the terminal 101 may report a smaller first overhead.

In some embodiments, the first CSI includes first indication information and second indication information, the first indication information is configured to indicate a quantity of non-zero values in the PMC, and the second indication information is configured to indicate positions of the non-zero values.

For example, the first part further includes the first indication information, that is, the first part includes RI and the first indication information. The first indication information may occupy fewer bits, thereby ensuring that total bits of the first part are still small. The second part includes the second indication information, that is, the second part includes positions of non-zero values in the PMC. The second part occupies more bits, and the positions of the non-zero values in the PMC are indicated through the second part.

For another example, the second part includes the first indication information and the second indication information, and the network device 102 may conveniently locate or determine the positions of the non-zero values in the second part according to the first indication information and the second indication information.

For another example, the first part includes the second indication information, and the second part includes the first indication information. This manner is applicable in a scenario where the second indication information occupies fewer bits, to avoid exceeding the total bits of the first part.

For another example, the first part includes the first indication information and the second indication information. In this manner, bits occupied by the first indication information and the second indication information should satisfy not exceeding total bits of the first part.

Optionally, the bits of the first part are relatively fixed, and the bits of the second part may be determined in combination with the configuration of the network device 102.

Optionally, the first indication information may indicate a quantity of non-zero values (or referred to as a quantity of non-zero coefficients) corresponding to all layers in the PMC, or indicate a quantity of non-zero values corresponding to each layer.

For example, among 120 bits of information that need to be reported by the terminal 101, most are 0. The terminal 101 may indicate a quantity of non-zero values in the PMC through the first indication information, and then indicate which positions in the PMC have the non-zero values through the second indication information, and may also indicate corresponding non-zero values, thereby facilitating saving capacity of information reported by the terminal 101 and also facilitating demodulation by the network device 102.

Optionally, the first indication information may occupy 1 to 2 bits, and the second indication information may occupy 1 to 2 bits.

In some embodiments, the first part and the second part are independently encoded, so as to ensure that the network device 102 may correctly decode the first part before decoding the second part.

Optionally, the first part needs to be completely transmitted before the second part is transmitted.

Optionally, a priority of the first part is higher than a priority of the second part. During the sending, the first part with a higher priority may be sent first. In combination with the description of the foregoing embodiments, when the reporting overhead of the terminal 101 exceeds the third overhead and part of reporting information needs to be discarded, the terminal 101 may discard information according to priority, for example, discarding information with a lower priority.

In some embodiments, time domain positions of the first part and the second part on an uplink resource are determined according to a mapping rule.

Optionally, the first part may be transmitted on PUCCH or PUSCH, for example, transmitted on PUCCH format 3 or PUCCH format 4. The first part may occupy a fixed overhead size.

Optionally, the second part may be transmitted on PUSCH. The overhead of the second part is relatively large, and the PUSCH may be used for transmission.

Optionally, the first part or the second part transmitted on PUSCH is unrelated to the first part transmitted on PUCCH.

In some embodiments, the first part is periodically or semi-statically sent; and the second part is semi-statically or aperiodically sent.

For example, the first part is periodically or semi-statically reported, and the second part is aperiodically reported. The overhead of the second part is relatively large, and it is preferable to use an aperiodic manner for transmission.

For another example, the first part is periodically reported on PUCCH, and the second part is semi-statically reported on PUSCH.

In some embodiments, the network device 102 receives the first CSI sent by the terminal 101.
step S2106: the network device 102 sends a second reference signal to the terminal 101.

In some embodiments, a time domain position of the second reference signal is after a time domain position of the first reference signal.

In some embodiments, after receiving the first CSI, the network device 102 may perform de-quantization and perform decoding based on an AI-based model to obtain recovered first CSI.

Optionally, the network device 102 may send the second reference signal according to the RI value in the first CSI.

In some embodiments, the second reference signal may be CSI-RS. The second reference signal may also be referred to as a second-step reference signal or a 2^{nd} reference signal.
step S2107: the terminal 101 sends second CSI to the network device 102 according to the second reference signal.

In some embodiments, the second CSI at least includes a channel quality indicator CQI.

Optionally, the terminal 101 decodes and measures the received second reference signal, determines a PMC used for precoding of the second reference signal sent by the network device 102, determines a CQI according to the PMC used by the network device 102, and reports the CQI to the network device 102. Therefore, the CQI reported by the terminal 101 is calculated according to an equivalent channel after precoding with the PMC decoded by the base station, which is more accurate.

Optionally, the network device 102 receives the second CSI and determines an appropriate MCS and coding rate according to the CQI. For example, the higher the CQI is, the higher the MCS that the network device 102 may use for transmitting information.

In the above embodiments, the terminal 101 reports CSI in two steps, and correspondingly, the network device 102 needs to send two-step reference signals respectively. During the reporting process, the network device 102 may perform corresponding overhead configuration and uplink resource configuration, such that in reporting of the first CSI, the terminal 101 may send the first part and the second part in the first CSI by using reasonable overhead and uplink resource according to configuration or indication of the network device 102.

In some embodiments, the names of information, etc. are not limited to those recorded in the embodiments. Terms such as "information", "message", "signal", "signaling", "report", "configuration", "indication", "instruction", "command", "channel", "parameter", "domain", and "field" may be replaced with one another.

In some embodiments, terms such as "obtain", "acquire", "get", "receive", "transmit", "bidirectional transmission", and "transmit and/or receive" may be replaced with one another. These terms can be interpreted as having multiple meanings, including receiving from another entity, acquiring from a protocol, obtaining through self-processing, and autonomous implementation, etc.

In some embodiments, terms such as "send", "transmit", "report", "deliver", "transmission", "bidirectional transmission", and "send and/or receive" may be replaced with one another.

In some embodiments, terms such as "radio", "wireless", "radio access network (RAN)", "access network (AN)", and "RAN-based" may be replaced with one another.

In some embodiments, terms such as "synchronization signal (SS)", "synchronization signal block (SSB)", "reference signal (RS)", "pilot", and "pilot signal" may be replaced with one another.

In some embodiments, terms such as "moment", "point in time", "time", and "time position" may be replaced with one another; terms such as "duration", "time period", "time window", "window", and "time" may be replaced with one another.

In some embodiments, terms such as "component carrier (CC)", "cell", "frequency carrier", and "carrier frequency" may be replaced with one another.

In some embodiments, terms such as "certain", "preseted", "preset", "set", "indicated", "a certain", "any", and "first" may be replaced with one another. Phrases like "a certain A", "a preseted A", "a preset A", "a set A", "an indicated A", "a certain A", "any A", and "a first A" can be interpreted as A pre-specified in a protocol, etc., or as A obtained through setting, configuration, indication, etc., or as a specific A, a certain A, any A, or a first A, etc., but are not limited thereto.

In some embodiments, a determination or judgment may be made using a value represented by 1 bit (0 or 1), or by a true or false value (boolean value) represented by true or false, or by a comparison of numerical values (e.g., comparison with a predetermined value), but is not limited thereto.

In some embodiments, "not expecting to receive" may be interpreted as not receiving on time-domain resources and/or frequency-domain resources, or may be interpreted as not performing subsequent processing on the data, etc. after receiving the data, etc.; "not expecting to send" may be interpreted as not sending, or as sending but not expecting the recipient to respond to the sent content.

The method involved in the embodiments of the present disclosure may include at least one of step S2101 to step S2107. For example, step S2105 and step S2107 may be implemented as an independent embodiment, step S2102, step S2105, and step S2107 may be implemented as an independent embodiment, step S2103, step S2105, and step S2107 may be implemented as an independent embodiment, and step S2101, step S2102, step S2103, step S2105, and step S2107 may be implemented as an independent embodiment, but are not limited thereto.

In some embodiments, at least one of step S2101, step S2102, step S2103, step S2104, and step S2106 is optional, and in different embodiments one or more of these steps may be omitted or replaced.

In some embodiments, step S2102 and step S2103 may be executed simultaneously or their order may be exchanged. For example, the network device 102 sends the first configuration information and the second configuration information by using the same radio resource control (RRC) information.

In some embodiments, reference may be made to other optional implementations described before or after the description corresponding to FIG. 2.

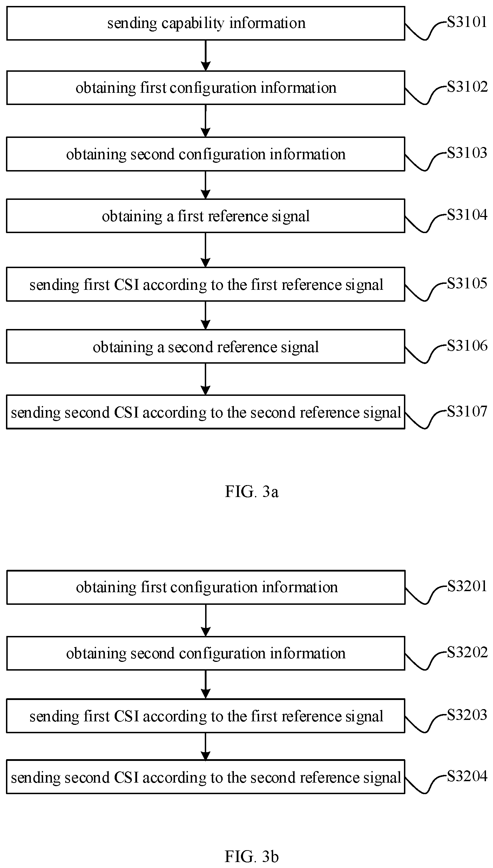

FIG. 3a is an interaction schematic diagram of a method for reporting CSI according to embodiments of the present disclosure. As shown in FIG. 3a, the embodiments of the present disclosure relate to a method for reporting CSI, and the method is executed by a terminal 101, and the method includes:
step S3101: sending capability information.

Optionally, optional implementations of step S3101 may refer to step S2101 in FIG. 2 and other related parts in the embodiments involved in FIG. 2, and details are not repeated herein.

In some embodiments, the terminal 101 may send the capability information to the network device 102, but is not limited thereto, and may also send capability information to another entity.
step S3102: obtaining first configuration information.

Optionally, optional implementations of step S3102 may refer to step S2102 in FIG. 2 and other related parts in the embodiments involved in FIG. 2, and details are not repeated herein.

In some embodiments, the terminal 101 may obtain the first configuration information from the network device 102, but is not limited thereto, and may also obtain the first configuration information from another entity.
step S3103: obtaining second configuration information.

Optionally, optional implementations of step S3103 may refer to step S2103 in FIG. 2 and other related parts in the embodiments involved in FIG. 2, and details are not repeated herein.

In some embodiments, the terminal 101 may obtain the second configuration information from the network device 102, but is not limited thereto, and may also obtain the second configuration information from another entity.
step S3104: obtaining a first reference signal.

Optionally, optional implementations of step S3104 may refer to step S2104 in FIG. 2 and other related parts in the embodiments involved in FIG. 2, and details are not repeated herein.

In some embodiments, the terminal 101 may obtain the first reference signal from the network device 102, but is not limited thereto, and may also obtain the first reference signal from another entity.
step S3105: sending first CSI according to the first reference signal.

Optionally, optional implementations of step S3105 may refer to step S2105 in FIG. 2 and other related parts in the embodiments involved in FIG. 2, and details are not repeated herein.

In some embodiments, the terminal 101 may send the first CSI to the network device 102, but is not limited thereto, and may also send the first CSI to another entity.
step S3106: obtaining a second reference signal.

Optionally, optional implementations of step S3106 may refer to step S2106 in FIG. 2 and other related parts in the embodiments involved in FIG. 2, and details are not repeated herein.

In some embodiments, the terminal 101 may obtain the second reference signal from the network device 102, but is not limited thereto, and may also obtain the second reference signal from another entity.
step S3107: sending second CSI according to the second reference signal.

Optionally, optional implementations of step S3107 may refer to step S2107 in FIG. 2 and other related parts in the embodiments involved in FIG. 2, and details are not repeated herein.

In some embodiments, the terminal 101 may send the second CSI to the network device 102, but is not limited thereto, and may also send the second CSI to another entity.

In some embodiments, reference may be made to other optional implementations described before or after the description corresponding to FIG. 3a.

FIG. 3b is an interaction schematic diagram of a method for reporting CSI according to embodiments of the present disclosure. As shown in FIG. 3b, the embodiments of the present disclosure relate to a method for reporting CSI, and the method is executed by the terminal 101, and the method includes:
step S3201: obtaining first configuration information.

Optionally, optional implementations of step S3201 may refer to step S2102 in FIG. 2 and other related parts in the embodiments involved in FIG. 2, and details are not repeated herein.
step S3202: obtaining second configuration information.

Optionally, optional implementations of step S3202 may refer to step S2103 in FIG. 2 and other related parts in the embodiments involved in FIG. 2, and details are not repeated herein.
step S3203: sending first CSI according to the first reference signal.

Optionally, optional implementations of step S3203 may refer to step S2105 in FIG. 2 and other related parts in the embodiments involved in FIG. 2, and details are not repeated herein.

In some embodiments, the terminal 101 may send the first CSI to the network device 102, but is not limited thereto, and may also send the first CSI to another entity.
step S3204: sending second CSI according to the second reference signal.

Optionally, optional implementations of step S3204 may refer to step S2107 in FIG. 2 and other related parts in the embodiments involved in FIG. 2, and details are not repeated herein.

In some embodiments, reference may be made to other optional implementations described before or after the description corresponding to FIG. 3b.

In some embodiments, step S3201 and step S3202 may be executed simultaneously, or their order may be exchanged.

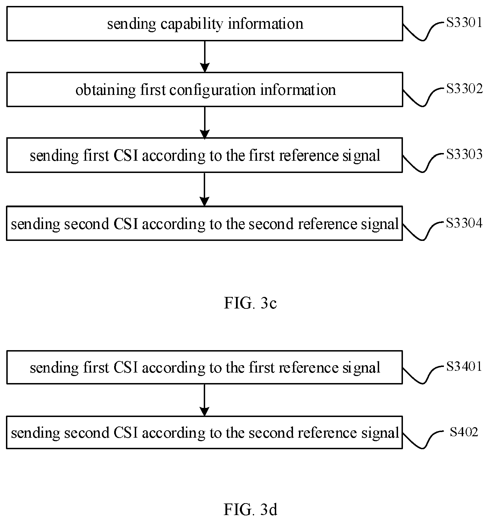

FIG. 3c is an interaction schematic diagram of a method for reporting CSI according to embodiments of the present disclosure. As shown in FIG. 3c, the embodiments of the present disclosure relate to a method for reporting CSI, and the method is executed by the terminal 101, and the method includes:
step S3301: sending capability information.

Optionally, optional implementations of step S3301 may refer to step S2101 in FIG. 2 and other related parts in the embodiments involved in FIG. 2, and details are not repeated herein.
step S3302: obtaining first configuration information.

Optionally, optional implementations of step S3302 may refer to step S2102 in FIG. 2 and other related parts in the embodiments involved in FIG. 2, and details are not repeated herein.
step S3303: sending first CSI according to the first reference signal.

Optionally, optional implementations of step S3303 may refer to step S2105 in FIG. 2 and other related parts in the embodiments involved in FIG. 2, and details are not repeated herein.
step S3304: sending second CSI according to the second reference signal.

Optionally, optional implementations of step S3304 may refer to step S2107 in FIG. 2 and other related parts in the embodiments involved in FIG. 2, and details are not repeated herein.

In some embodiments, reference may be made to other optional implementations described before or after the description corresponding to FIG. 3c.

In some embodiments, in step S3302, the second configuration information may also be sent simultaneously.

FIG. 3d is an interaction schematic diagram of a method for reporting CSI according to embodiments of the present disclosure. As shown in FIG. 3d, the embodiments of the present disclosure relate to a method for reporting CSI, and the method is executed by the terminal 101, and the method includes:
step S3401: sending first CSI according to the first reference signal.

Optionally, optional implementations of step S3401 may refer to step S2105 in FIG. 2 and other related parts in the embodiments involved in FIG. 2, and details are not repeated herein.

In some embodiments, the first CSI includes a first part and a second part, the first part includes the RI, and the second part includes the PMC.

Optionally, the PMC includes at least one of:
feature vector information;
precoding matrix information; or
codebook indication information based on a specific codebook.

In some embodiments, the terminal may further report the capability information to the network device to indicate a first overhead, and the first overhead is a payload required to be occupied by the PMC corresponding to the RI.

Optionally, the capability information includes a model identifier of the model, and the model identifier has a corresponding relationship with the first overhead.

In some embodiments, the first part further includes an overhead identifier, where the overhead identifier has a corresponding relationship with the first overhead corresponding to the PMC.

Optionally, the first overhead is a per-layer overhead, or the first overhead is a per-rank overhead.

In some embodiments, the terminal may receive first configuration information sent by the network device, where the first configuration information is configured to indicate a second overhead, and the second overhead is a payload occupied by the PMC configured by the network device.

Optionally, the first configuration information includes at least one model identifier, and the at least one model identifier is respectively configured with a corresponding second overhead.

Optionally, the second overhead is configured per-layer, or configured per-rank.

In some embodiments, the first part further includes first indication information, where the first indication information is configured to indicate a quantity of non-zero values in the PMC;
the second part includes second indication information, where the second indication information is configured to indicate positions of the non-zero values.

In some embodiments, the terminal may further receive second configuration information sent by the network device, where the second configuration information is used to configure an uplink resource of the terminal, and the uplink resource is configured to transmit the first part and/or the second part.

In some embodiments, the first part and the second part are independently encoded.

In some embodiments, time domain positions of the first part and the second part on an uplink resource are determined according to a mapping rule.

In some embodiments, an uplink resource for transmitting the first part includes a physical uplink control channel PUCCH or a physical uplink shared channel PUSCH, and an uplink resource for transmitting the second part includes the PUSCH.

In some embodiments, a priority of the first part is higher than a priority of the second part.

In some embodiments, the first part is periodically or semi-statically sent;
the second part is semi-statically or aperiodically sent.
step S3402: sending second CSI according to the second reference signal.

Optionally, optional implementations of step S3402 may refer to step S2107 in FIG. 2 and other related parts in the embodiments involved in FIG. 2, and details are not repeated herein.

In some embodiments, reference may be made to other optional implementations described before or after the description corresponding to FIG. 3d.

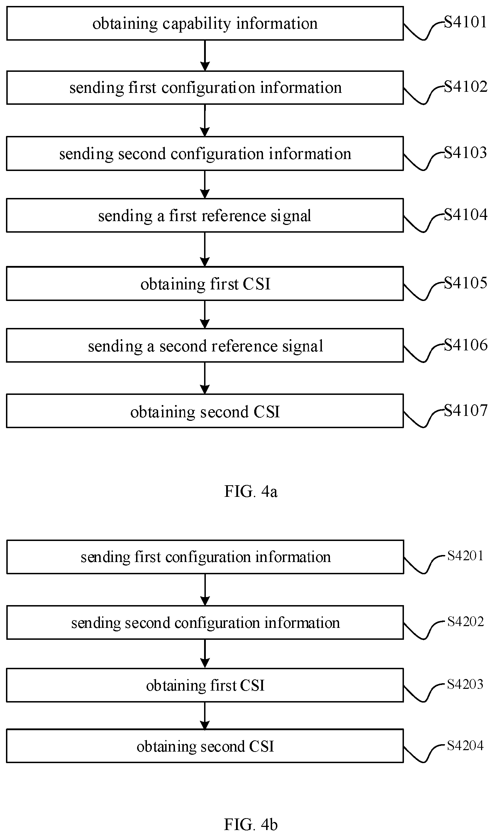

FIG. 4a is an interaction schematic diagram of a method for receiving CSI according to an embodiment of the present disclosure. As shown in FIG. 4a, the embodiments of the present disclosure relate to a method for receiving CSI, and the method is executed by the network device 102, and the method includes:
step S4101: obtaining capability information.

Optionally, optional implementations of step S4101 may refer to step S2101 in FIG. 2 and other related parts in the embodiments involved in FIG. 2, and details are not repeated herein.

In some embodiments, the network device 102 may obtain the capability information from the terminal 101, but is not limited thereto, and may also obtain the capability information from another entity.
step S4102: sending first configuration information.

Optionally, optional implementations of step S4102 may refer to step S2102 in FIG. 2 and other related parts in the embodiments involved in FIG. 2, and details are not repeated herein.

In some embodiments, the network device 102 may send the first configuration information to the terminal 101, but is not limited thereto, and may also send the first configuration information to another entity.
step S4103: sending second configuration information.

Optionally, optional implementations of step S4103 may refer to step S2103 in FIG. 2 and other related parts in the embodiments involved in FIG. 2, and details are not repeated herein.

In some embodiments, the network device 102 may send the second configuration information to the terminal 101, but is not limited thereto, and may also send the second configuration information to another entity.
step S4104: sending a first reference signal.

Optionally, optional implementations of step S4104 may refer to step S2104 in FIG. 2 and other related parts in the embodiments involved in FIG. 2, and details are not repeated herein.

In some embodiments, the network device 102 may send the first reference signal to the terminal 101, but is not limited thereto, and may also send the first reference signal to another entity.
step S4105: obtaining first CSI.

Optionally, optional implementations of step S4105 may refer to step S2105 in FIG. 2 and other related parts in the embodiments involved in FIG. 2, and details are not repeated herein.

In some embodiments, the network device 102 may obtain the first CSI from the terminal 101, but is not limited thereto, and may also obtain the first CSI from another entity.
step S4106: sending a second reference signal.

Optionally, optional implementations of step S4106 may refer to step S2106 in FIG. 2 and other related parts in the embodiments involved in FIG. 2, and details are not repeated herein.

In some embodiments, the network device 102 may send the second reference signal to the terminal 101, but is not limited thereto, and may also send the second reference signal to another entity.
step S4107: obtaining second CSI.

Optionally, optional implementations of step S4107 may refer to step S2107 in FIG. 2 and other related parts in the embodiments involved in FIG. 2, and details are not repeated herein.

In some embodiments, the network device 102 may obtain the second CSI from the terminal 101, but is not limited thereto, and may also obtain the second CSI from another entity.

In some embodiments, reference may be made to other optional implementations described before or after the description corresponding to FIG. 4a.

FIG. 4b is an interaction schematic diagram of a method for receiving CSI according to embodiments of the present disclosure. As shown in FIG. 4b, the embodiments of the present disclosure relate to a method for receiving CSI, and the method is executed by the network device 102, and the method includes:
step S4201: sending first configuration information.

Optionally, optional implementations of step S4201 may refer to step S2102 in FIG. 2 and other related parts in the embodiments involved in FIG. 2, and details are not repeated herein.
step S4202: sending second configuration information.

Optionally, optional implementations of step S4202 may refer to step S2103 in FIG. 2 and other related parts in the embodiments involved in FIG. 2, and details are not repeated herein.
step S4203: obtaining first CSI.

Optionally, optional implementations of step S4203 may refer to step S2105 in FIG. 2 and other related parts in the embodiments involved in FIG. 2, and details are not repeated herein.
step S4204: obtaining second CSI.

Optionally, optional implementations of step S4204 may refer to step S2107 in FIG. 2 and other related parts in the embodiments involved in FIG. 2, and details are not repeated herein.

In some embodiments, reference may be made to other optional implementations described before or after the description corresponding to FIG. 4b.

In some embodiments, step S4201 and step S4202 may be executed simultaneously, or their order may be exchanged.

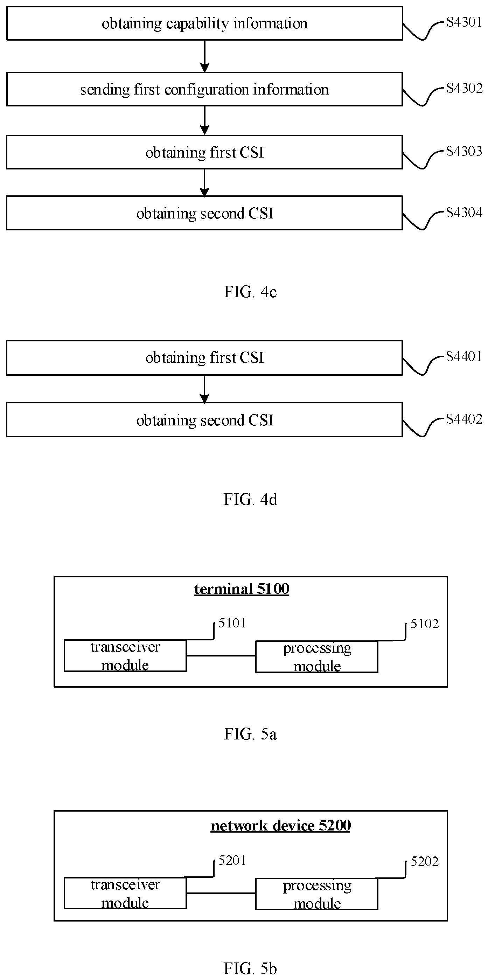

FIG. 4c is an interaction schematic diagram of a method for receiving CSI according to embodiments of the present disclosure. As shown in FIG. 4c, the embodiments of the present disclosure relate to a method for receiving CSI, and the method is executed by the network device 102, and the method includes:
step S4301: obtaining capability information.

Optionally, optional implementations of step S4301 may refer to step S2101 in FIG. 2 and other related parts in the embodiments involved in FIG. 2, and details are not repeated herein.
step S4302: sending first configuration information.

Optionally, optional implementations of step S4302 may refer to step S2102 in FIG. 2 and other related parts in the embodiments involved in FIG. 2, and details are not repeated herein.
step S4303: obtaining first CSI.

Optionally, optional implementations of step S4303 may refer to step S2105 in FIG. 2 and other related parts in the embodiments involved in FIG. 2, and details are not repeated herein.
step S4304: obtaining second CSI.

Optionally, optional implementations of step S4304 may refer to step S2107 in FIG. 2 and other related parts in the embodiments involved in FIG. 2, and details are not repeated herein.

In some embodiments, reference may be made to other optional implementations described before or after the description corresponding to FIG. 4c.

In some embodiments, in step S4302, second configuration information may also be obtained simultaneously.

FIG. 4d is an interaction schematic diagram of a method for receiving CSI according to embodiments of the present disclosure. As shown in FIG. 4d, the embodiments of the present disclosure relate to a method for receiving CSI, and the method is executed by the network device 102, and the method includes:
step S4401: obtaining first CSI.

Optionally, optional implementations of step S4401 may refer to step S2105 in FIG. 2 and other related parts in the embodiments involved in FIG. 2, and details are not repeated herein.

In some embodiments, the first CSI includes a first part and a second part, the first part includes the RI, and the second part includes the PMC.

Optionally, the PMC includes at least one of:
feature vector information;
precoding matrix information; or
codebook indication information based on a specific codebook.

In some embodiments, the network device may receive capability information sent by the terminal, where the capability information is configured to indicate a first overhead, and the first overhead is a payload required to be occupied by the PMC corresponding to the RI.

Optionally, the capability information includes a model identifier of the model, and the model identifier has a corresponding relationship with the first overhead.

In some embodiments, the first part further includes an overhead identifier, where the overhead identifier has a corresponding relationship with the first overhead corresponding to the PMC.

Optionally, the first overhead is a per-layer overhead, or the first overhead is a per-rank overhead.

In some embodiments, the network device may send first configuration information to the terminal, where the first configuration information is configured to indicate a second overhead, and the second overhead is a payload occupied by the PMC configured by the network device.

Optionally, the first configuration information includes at least one model identifier, and the at least one model identifier is respectively configured with a corresponding second overhead.

Optionally, the second overhead is configured per-layer, or configured per-rank.

In some embodiments, the first part further includes first indication information, where the first indication information is configured to indicate a quantity of non-zero values in the PMC;
the second part includes second indication information, where the second indication information is configured to indicate positions of the non-zero values.

In some embodiments, the network device may send second configuration information to the terminal, where the second configuration information is used to configure an uplink resource of the terminal for transmitting the first part and/or the second part.

In some embodiments, the first part and the second part are independently decoded.

In some embodiments, time domain positions of the first part and the second part on an uplink resource are determined according to a mapping rule.

In some embodiments, an uplink resource for transmitting the first part includes a physical uplink control channel PUCCH or a physical uplink shared channel PUSCH, and an uplink resource for transmitting the second part includes the PUSCH.

In some embodiments, a priority of the first part is higher than a priority of the second part.

In some embodiments, the first part is periodic or semi-static;
the second part is semi-static or aperiodic.
step S4402: obtaining second CSI.

Optionally, optional implementations of step S4402 may refer to step S2107 in FIG. 2 and other related parts in the embodiments involved in FIG. 2, and details are not repeated herein.

In some embodiments, reference may be made to other optional implementations described before or after the description corresponding to FIG. 4d.

The embodiments of the present disclosure are intended to clarify contents and a manner of first-step reporting in the 2-step AI CSI reporting. In the first-step reporting in a process of 2-step reporting, since a quantity of feature vectors of a channel, or a rank value, is uncertain, a base station needs to determine the payload of subsequent feature vectors according to the RI value. For reporting of RI + feature vectors in the first step, a specific reporting manner and resource allocation have not been clearly defined. Some examples are listed below:

### Example 1:

A UE uses 2-step CSI reporting according to configuration or indication of a base station. The UE reports first information in the 1^{st} step and reports second information in the 2^{nd} step. The first information is obtained based on a first reference signal, and the second information is obtained based on a second reference signal, and the first reference signal is earlier than the second reference signal in time domain.

Optionally, the first information at least includes RI and channel information (hereinafter referred to as PMC) that is compressed and quantized, where the channel information may include at least one of feature vector information, precoding matrix information, or codebook indication information based on a specific codebook.

Optionally, the second information at least includes CQI.

Optionally, the first information corresponds to the first CSI in the foregoing embodiments, and the second information corresponds to the second CSI in the foregoing embodiments.

### Example 2:

The UE determines that a 1^{st} step CSI report includes two parts, where part 1 at least includes RI, and part 2 at least includes PMC.

### Example 3:

The part 1 includes RI. This embodiment may refer to the following instances:
Instance 1: The UE reports payload through UE capability. The payload may be the per-layer payload number or the per-rank payload number. The UE only reports RI (a quantity of ranks), and NW (that is, the network device) may acquire the payload of the PMC. Instance 2: The UE performs the reporting through a model ID in UE capability, and the base station may acquire the per-layer payload number or the per-rank payload number corresponding to the model ID. The UE only reports RI (a quantity of ranks), and the NW may acquire the payload of the PMC.
Instance 3: The NW configures reporting overhead of the PMC in CSI configuration. The configuration may be per layer (payload of each layer is X, and a corresponding total payload = RI*X), or may be per rank (for rank1, payload is X; for rank2, payload is Y; ...). The UE only reports RI (a quantity of ranks), and the NW may acquire the payload of the PMC.

### Example 4:

Part 1 includes RI and a quantity of non-zero coefficients of all layers in the PMC, or a quantity of non-zero coefficients of each layer. (If most of the 120 bits reported are 0, the UE only needs to report the positions where the values are not 0, and the corresponding non-zero values.)

In an embodiment, part 1 includes RI and a corresponding payload size ID. When a model ID used by the UE is different, the payload corresponding to each layer or each rank is different.

Similar to the case in which part 1 includes RI, the difference is that overhead per layer or per rank may vary in different ways. For example, for each layer, payload ID#1 is X, and payload ID#2 is Y. In this case, the UE needs to report the payload ID information along with the RI.

Optionally, the reason for having multiple kinds of payload IDs is that, depending on the different compression ratios, the same input information dimension may result in different output dimensions. After quantization, different output payloads can be obtained. Generally, the larger the output payload, the higher the similarity of the PMC restored at the network side.

### Example 5:

The base station configures a maximum overhead number of a PMC corresponding to different RI through RRC, or a maximum overhead number of PMC corresponding to each layer. The maximum overhead number may be understood as that all parameters of the PMC are non-zero.

### Example 6:

The UE reports the payload through UE capability. The payload may be a per-layer payload number, or a per-rank payload number.

### Example 7:

The UE reports through a model ID in UE capability, and the base station may acquire a per-layer payload number or per-rank payload number corresponding to the model ID.

### Example 8:

In order to ensure that the NW may correctly decode part 1 before decoding part 2, part 1 and part 2 are independently encoded.

### Example 9:

The part 1 may be periodically or semi-statically reported, and part 2 may be semi-statically or aperiodically reported.

In an embodiment, part 1 may be transmitted on PUCCH, for example, PUCCH format 3 or 4; part 2 is transmitted on PUSCH. Since the overhead of part 2 is relatively large, the PUSCH is used for transmission.

In an embodiment, part 1 is periodically or semi-statically reported, and part 2 is aperiodic. Since overhead of part 2 is relatively large, an aperiodic transmission manner is used.

In an embodiment, part 1 is periodically reported on PUCCH, and part 2 is semi-statically reported on PUSCH.

The part 1/part 2 transmitted on PUSCH is unrelated to part 1 transmitted on PUCCH.

### Example 10:

A mapping rule of part 1 and part 2 on PUSCH.

### Example 11:

A priority of part 1 is higher than a priority of part 2.

### Example 12:

For two-step CSI reporting on PUSCH, or AI-based CSI reporting, or model-based CSI reporting, CSI reporting or first-step CSI reporting includes two parts. The part 1 has a fixed overhead size and is configured to indicate a number of information bits in part 2. Part 1 should be completely transmitted before part 2.

Optionally, part 1 includes RI (if reported) and an indication of a quantity of non-zero coefficients of each layer or across layers.

Optionally, part 2 includes PMC.

Optionally, part 1 and part 2 are independently encoded.

Embodiments of the present disclosure further provide an apparatus for implementing any of the foregoing methods. For example, an apparatus is provided, and the apparatus includes units or modules configured to implement respective steps executed by a terminal in any of the foregoing methods. As another example, another apparatus is further provided, which includes units or modules configured to implement respective steps executed by a network device (for example, an access network device, a core network function node, a core network device, and the like) in any of the foregoing methods.

It should be understood that division of units or modules in the foregoing apparatus is only a logical functional division. In actual implementation, the units or modules may be wholly or partially integrated into one physical entity, or may be physically separated. In addition, units or modules in the apparatus may be implemented in a form in which a processor invokes software. For example, the apparatus includes a processor, the processor is connected to a memory, instructions are stored in the memory, and the processor invokes the instructions stored in the memory so as to implement any of the foregoing methods or implement functions of respective units or modules in the apparatus, where the processor is, for example, a general processor, such as a Central Processing Unit (CPU) or a microprocessor, and the memory is a memory inside the apparatus or a memory outside the apparatus. Alternatively, the units or modules in the apparatus may be implemented in a form of hardware circuits, and functions of some or all of the units or modules may be implemented by designing hardware circuits. The hardware circuits may be understood as one or more processors. For example, in one implementation, the hardware circuits are application-specific integrated circuits (ASIC), and functions of some or all of the units or modules are implemented by designing logical relationships of components within the circuits. For another example, in another implementation, the hardware circuits may be implemented through programmable logic devices (PLD). Taking a Field Programmable Gate Array (FPGA) as an example, the FPGA may include a large quantity of logic gate circuits, and connection relationships between the logic gate circuits are configured through configuration files so as to implement functions of some or all of the units or modules. All units or modules in the foregoing apparatus may be implemented entirely in a form in which a processor invokes software, or entirely in a form of hardware circuits, or partially implemented in a form in which a processor invokes software and remaining parts implemented in a form of hardware circuits.

In the embodiments of the present disclosure, a processor is a circuit having signal processing capability. In one implementation, the processor may be a circuit having an instruction reading and running capability, for example, a Central Processing Unit (CPU), a microprocessor, a graphics processing unit (GPU) (which may be understood as a microprocessor), or a digital signal processor (DSP), and the like. In another implementation, the processor may implement certain functions through logical relationships of hardware circuits, and the logical relationships of the hardware circuits may be fixed or reconfigurable. For example, the processor is a hardware circuit implemented by an application-specific integrated circuit (ASIC) or a programmable logic device (PLD), such as FPGA. In the reconfigurable hardware circuit, a process in which the processor loads a configuration document to implement configuration of the hardware circuit may be understood as a process in which the processor loads instructions to implement functions of some or all of the units or modules described above. In addition, the processor may also be a hardware circuit designed for artificial intelligence, which may be understood as an ASIC, for example, a Neural Network Processing Unit (NPU), a Tensor Processing Unit (TPU), a Deep Learning Processing Unit (DPU), and the like.

FIG. 5a is a schematic structural diagram of a terminal according to embodiments of the present disclosure. As shown in FIG. 5a, the terminal 5100 may include at least one of a transceiver module 5101, a processing module 5102, and the like. In some embodiments, the transceiver module 5101 is configured to send first CSI to a network device according to a first reference signal, where the first CSI at least includes a precoding matrix code PMC processed based on a model and a rank indication RI; the transceiver module is further configured to send second CSI to the network device according to a second reference signal, where the second CSI at least includes a channel quality indication CQI.

Optionally, the transceiver module 5101 is configured to execute at least one of communication steps such as sending and/or receiving executed by the terminal 101 in any of the foregoing methods. Optionally, the processing module is configured to execute at least one of other steps executed by the terminal 101 in any of the foregoing methods, and details are not repeated herein.

Optionally, the first CSI includes a first part and a second part, where the first part includes the RI, and the second part includes the PMC.

Optionally, the transceiver module 5101 is configured to send capability information to the network device, where the capability information is used to indicate a first overhead, and the first overhead is a payload required by the PMC corresponding to the RI.

Optionally, the capability information includes a model identifier of the model, and the model identifier has a corresponding relationship or mapping relationship with the first overhead.

Optionally, the first part further includes an overhead identifier, where the overhead identifier has a corresponding relationship or mapping relationship with the first overhead.

Optionally, the first overhead is a per-layer overhead, or the first overhead is a per-rank overhead.

Optionally, the transceiver module 5101 is configured to receive first configuration information sent by the network device, where the first configuration information is used to indicate a second overhead, and the second overhead is a payload occupied by the PMC configured by the network device.

Optionally, the first configuration information includes at least one model identifier, and the at least one model identifier is respectively configured with a corresponding second overhead.

Optionally, the second overhead is configured per-layer, or configured per-rank.

Optionally, the first CSI includes first indication information and second indication information, where the first indication information is used to indicate a quantity of non-zero values in the PMC, and the second indication information is used to indicate positions of the non-zero values.

Optionally, the transceiver module 5101 is configured to receive second configuration information sent by the network device, where the second configuration information is used to configure an uplink resource of the terminal, and the uplink resource is used to transmit the first part and/or the second part.

Optionally, the uplink resource is further used to indicate a third overhead for transmitting the first part and/or the second part.

Optionally, the uplink resource includes a physical uplink control channel (PUCCH) and a physical uplink shared channel (PUSCH), the PUCCH or the PUSCH is used to transmit the first part, and the PUSCH is used to transmit the second part.

Optionally, the first part and the second part are independently encoded.

Optionally, time-domain positions of the first part and the second part on the uplink resources are determined according to a mapping rule.

Optionally, a priority of the first part is higher than a priority of the second part.

Optionally, the first part is periodically or semi-statically sent;
the second part is semi-statically or aperiodically sent.

Optionally, the PMC includes at least one of the following:
feature vector information;
precoding matrix information; or
codebook indication information based on a specific codebook.

FIG. 5b is a schematic structural diagram of a network device according to embodiments of the present disclosure. As shown in FIG. 5b, the network device 5200 may include at least one of a transceiver module 5201, a processing module 5202, and the like. In some embodiments, the transceiver module 5201 is configured to receive first CSI sent by a terminal, where the first CSI at least includes a PMC processed based on a model and an RI; the transceiver module is further configured to receive second CSI sent by the terminal, where the second CSI at least includes a CQI.

Optionally, the transceiver module 5201 is configured to execute at least one of communication steps such as sending and/or receiving executed by the network device 102 in any of the foregoing methods, and details are not repeated herein. Optionally, the processing module is configured to execute at least one of other steps executed by the network device 102 in any of the foregoing methods, and details are not repeated herein.

Optionally, the first CSI includes a first part and a second part, where the first part includes the RI, and the second part includes the PMC.

Optionally, the transceiver module 5201 is configured for a network device to receive capability information sent by the terminal, where the capability information is used to indicate a first overhead, and the first overhead is a payload required by the PMC corresponding to the RI.

Optionally, the capability information includes a model identifier of the model, and the model identifier has a corresponding relationship with the first overhead.

Optionally, the first part further includes an overhead identifier, where the overhead identifier has a corresponding relationship with the first overhead.

Optionally, the first overhead is a per-layer overhead, or the first overhead is a per-rank overhead.

Optionally, the transceiver module 5201 is configured to send first configuration information to the terminal, where the first configuration information is used to indicate a second overhead, and the second overhead is a payload occupied by the PMC configured by the network device.

Optionally, the first configuration information includes at least one model identifier, and the at least one model identifier is respectively configured with a corresponding second overhead.

Optionally, the second overhead is configured per-layer, or configured per-rank.

Optionally, the first CSI includes first indication information and second indication information, where the first indication information is used to indicate a quantity of non-zero values in the PMC; and the second indication information is used to indicate positions of the non-zero values.

Optionally, the transceiver module 5201 sends second configuration information to the terminal, where the second configuration information is used to configure an uplink resource of the terminal for transmitting the first part and/or the second part.

Optionally, the uplink resource is further used to indicate a third overhead for transmitting the first part and/or the second part.

Optionally, the uplink resource includes a physical uplink control channel PUCCH and a physical uplink shared channel PUSCH, the PUCCH or the PUSCH is used to transmit the first part, and the PUSCH is used to transmit the second part.

Optionally, the first part and the second part are independently decoded.

Optionally, time-domain positions of the first part and the second part on the uplink resources are determined according to a mapping rule.

Optionally, a priority of the first part is higher than a priority of the second part.

Optionally, the first part is periodic or semi-static;
the second part is semi-static or aperiodic.

Optionally, the PMC includes at least one of the following:
feature vector information;
precoding matrix information; or
codebook indication information based on a specific codebook.

In some embodiments, the transceiver module may include a sending module and/or a receiving module, and the sending module and the receiving module may be separated or integrated together. Optionally, the transceiver module may be replaced with a transceiver.

In some embodiments, the processing module may be a single module, or may include a plurality of sub-modules. Optionally, the plurality of sub-modules respectively execute all or part of the steps to be executed by the processing module. Optionally, the processing module may be replaced with a processor.

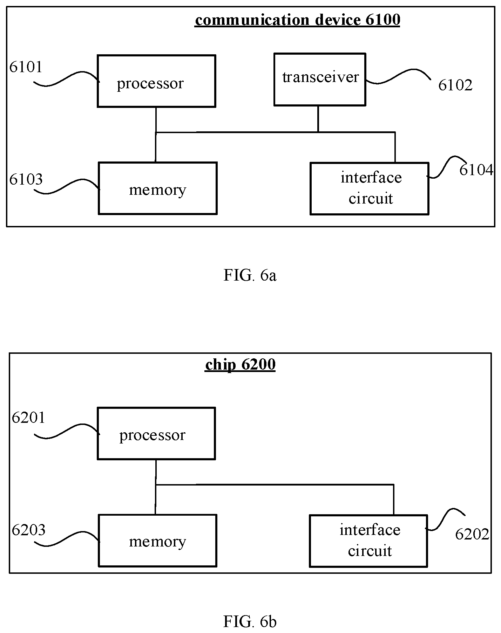

FIG. 6a is a schematic structural diagram of a communication device 6100 according to embodiments of the present disclosure. The communication device 6100 may be a network device (for example, an access network device, a core network device, and the like), or may be a terminal (for example, user equipment, and the like), or may be a chip, a chip system, or a processor that supports the network device to implement any of the foregoing methods, or may be a chip, a chip system, or a processor that supports the terminal to implement any of the foregoing methods. The communication device 6100 may be used to implement the methods described in the above method embodiments. For details, reference may be made to descriptions in the foregoing method embodiments.

As shown in FIG. 6a, the communication device 6100 includes one or more processors 6101. The processor 6101 may be a general-purpose processor or a special-purpose processor, for example, may be a baseband processor or a central processing unit. The baseband processor may be used to process communication protocols and communication data, and the central processing unit may be used to control the communication device (for example, a base station, a baseband chip, terminal equipment, a terminal equipment chip, DU, or CU, and the like), execute programs, and process data of the programs. Optionally, the communication device 6100 is configured to execute any of the foregoing methods. Optionally, the one or more processors 6101 are configured to invoke instructions such that the communication device 6100 executes any of the foregoing methods.

In some embodiments, the communication device 6100 further includes one or more transceivers 6102. When the communication device 6100 includes the one or more transceivers 6102, the transceiver 6102 executes at least one of communication steps such as sending and/or receiving in the foregoing methods, and the processor 6101 executes at least one of other steps. In optional embodiments, the transceiver may include a receiver and/or a transmitter, and the receiver and the transmitter may be separated or integrated together. Optionally, terms such as transceiver, transceiver unit, transceiver machine, transceiver circuit, interface circuit, and interface may be used interchangeably; terms such as transmitter, sending unit, sending machine, and sending circuit may be used interchangeably; and terms such as receiver, receiving unit, receiving machine, and receiving circuit may be used interchangeably.

In some embodiments, the communication device 6100 further includes one or more memories 6103 for storing data. Optionally, all or part of the memories 6103 may also be located outside the communication device 6100. In optional embodiments, the communication device 6100 may include one or more interface circuits 6104. Optionally, the interface circuit 6104 is connected to the memory 6102, and the interface circuit 6104 may be configured to receive data from the memory 6102 or other devices, and may be configured to send data to the memory 6102 or other devices. For example, the interface circuit 6104 may read data stored in the memory 6102 and send the data to the processor 6101.

The communication device 6100 described in the above embodiments may be a network device or a terminal. However, the scope of the communication device 6100 described in the present disclosure is not limited thereto, and the structure of the communication device 6100 is not limited by FIG. 6a. The communication device may be an independent device or may be a part of a larger device. For example, the communication device may be: (1) an independent integrated circuit IC, or a chip, or a chip system or subsystem; (2) a set including one or more ICs, and optionally the set of ICs may further include a storage component used for storing data and programs; (3) an ASIC, for example, a modem; (4) a module that may be embedded in another device; (5) a receiver, terminal equipment, intelligent terminal equipment, a cellular phone, a wireless device, a handset, a mobile unit, a vehicle-mounted device, a network device, a cloud device, an artificial intelligence device, and the like; (6) other devices, and the like.

FIG. 6b is a schematic structural diagram of a chip 6200 according to embodiments of the present disclosure. In a case where the communication device 6100 may be a chip or a chip system, reference may be made to the schematic structural diagram of the chip 6200 shown in FIG. 6b, but the present disclosure is not limited thereto.

The chip 6200 includes one or more processors 6201. The chip 6200 is configured to execute any of the foregoing methods.

In some embodiments, the chip 6200 further includes one or more interface circuits 6202. Optionally, terms such as interface circuit, interface, and transceiver pin may be used interchangeably. In some embodiments, the chip 6200 further includes one or more memories 6203 for storing data. Optionally, all or part of the memories 6203 may be located outside the chip 6200. Optionally, the interface circuit 6202 is connected to the memory 6203, and the interface circuit 6202 may be configured to receive data from the memory 6203 or other devices, and may be configured to send data to the memory 6203 or other devices. For example, the interface circuit 6202 may read data stored in the memory 6203 and send the data to the processor 6201.

In some embodiments, the interface circuit 6202 executes at least one of communication steps such as sending and/or receiving in the foregoing methods. Execution by the interface circuit 6202 of communication steps such as sending and/or receiving in the foregoing methods may refer to: the interface circuit 6202 executing data interaction among the processor 6201, the chip 6200, the memory 6203, or transceiver components. In some embodiments, the processor 6201 executes at least one of other steps.

Various modules and/or devices described in various embodiments of a virtual apparatus, an entity apparatus, a chip, etc., may be arbitrarily combined or separated according to situations. Optionally, part or all of steps may also be performed by a plurality of modules and/or devices in collaboration, which is not limited herein.

The present disclosure further provides a storage medium. The storage medium stores instructions, and when the instructions are executed on the communication device 6100, the communication device 6100 is enabled to execute any of the foregoing methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further provides a program product. When the program product is executed by the communication device 6100, the communication device 6100 is enabled to execute any of the foregoing methods. Optionally, the program product is a computer program product.

The present disclosure further provides a computer program. When the computer program runs on a computer, the computer is enabled to execute any of the foregoing methods.

### INDUSTRIAL APPLICABILITY

In embodiments of the present disclosure, a terminal reports different CSI in two steps according to two groups of reference signals having different time-domain positions. The CQI reported by the terminal in the second step is directly related to the PMC decoded by the network device, and is closer to a decoding result of the network device, thereby effectively improving accuracy of the reported CQI.

## Claims

1. A method for reporting channel state information CSI, comprising:
sending, by a terminal, first CSI to a network device according to a first reference signal, wherein the first CSI at least comprises a precoding matrix code PMC processed based on a model and a rank indication RI; and
sending, by the terminal, second CSI to the network device according to a second reference signal, wherein the second CSI at least comprises a channel quality indicator CQI.

2. The method according to claim 1, wherein the first CSI comprises a first part and a second part, the first part comprises the RI, and the second part comprises the PMC.

3. The method according to claim 2, further comprising:
sending, by the terminal, capability information to the network device, wherein the capability information is configured to indicate a first overhead, and the first overhead is a payload required to be occupied by the PMC corresponding to the RI.

4. The method according to claim 3, wherein the capability information comprises a model identifier of the model, and the model identifier has a corresponding relationship or a mapping relationship with the first overhead.

5. The method according to claim 2 or 3, wherein the first part further comprises an overhead identifier, wherein the overhead identifier has a corresponding relationship or a mapping relationship with a first overhead.

6. The method according to any one of claims 3 to 5, wherein the first overhead is a per-layer overhead, or the first overhead is a per-rank overhead.

7. The method according to any one of claims 2 to 5, further comprising:
receiving, by the terminal, first configuration information sent by the network device, wherein the first configuration information is configured to indicate a second overhead, and the second overhead is a payload occupied by the PMC configured by the network device.

8. The method according to claim 7, wherein the first configuration information comprises at least one model identifier, and the at least one model identifier is respectively configured with the second overhead corresponding to the at least one model identifier.

9. The method according to claim 7, wherein the second overhead is configured per-layer, or configured per-rank.

10. The method according to claim 2, wherein the first CSI comprises first indication information and second indication information, the first indication information is configured to indicate a quantity of non-zero values in the PMC, and the second indication information is configured to indicate positions of the non-zero values.

11. The method according to claim 2, further comprising:
receiving, by the terminal, second configuration information sent by the network device, wherein the second configuration information is used to configure an uplink resource of the terminal, and the uplink resource is configured to transmit the first part and/or the second part.

12. The method according to claim 11, wherein, the uplink resource is further configured to indicate a third overhead for transmitting the first part and/or the second part.

13. The method according to claim 11, wherein the uplink resource comprises a physical uplink control channel PUCCH and a physical uplink shared channel PUSCH, the PUCCH or the PUSCH is configured to transmit the first part, and the PUSCH is configured to transmit the second part.

14. The method according to any one of claims 2 to 13, wherein the first part and the second part are independently encoded.

15. The method according to any one of claims 2 to 13, wherein a time domain position of the first part and a time domain position of the second part on an uplink resource are determined according to a mapping rule.

16. The method according to any one of claims 2 to 13, wherein a priority of the first part is higher than a priority of the second part.

17. The method according to any one of claims 2 to 13, wherein the first part is sent periodically or semi-statically; and
the second part is sent semi-statically or aperiodically.

18. The method according to any one of claims 1 to 13, wherein the PMC comprises at least one of:
feature vector information;
precoding matrix information; or
codebook indication information based on a specific codebook.

19. A method for receiving CSI, comprising:
receiving, by a network device, first CSI sent by a terminal, wherein the first CSI at least comprises a PMC processed based on a model and an RI; and
receiving, by the network device, second CSI sent by a terminal, wherein the second CSI at least comprises a CQI.

20. The method according to claim 19, wherein the first CSI comprises a first part and a second part, the first part comprises the RI, and the second part comprises the PMC.

21. The method according to claim 20, further comprising:
receiving, by the network device, capability information sent by the terminal, wherein the capability information is configured to indicate a first overhead, and the first overhead is a payload required to be occupied by the PMC corresponding to the RI.

22. The method according to claim 21, wherein the capability information comprises a model identifier of the model, and the model identifier has a corresponding relationship with the first overhead.

23. The method according to claim 20 or 21, wherein the first part further comprises an overhead identifier, wherein the overhead identifier has a corresponding relationship with a first overhead.

24. The method according to any one of claims 21 to 23, wherein the first overhead is a per-layer overhead, or the first overhead is a per-rank overhead.

25. The method according to any one of claims 20 to 23, further comprising:
sending, by the network device, first configuration information to the terminal, wherein the first configuration information is configured to indicate a second overhead, and the second overhead is a payload occupied by the PMC configured by the network device.

26. The method according to claim 25, wherein the first configuration information comprises at least one model identifier, and the at least one model identifier is respectively configured with the second overhead corresponding to the at least one model identifier.

27. The method according to claim 25, wherein the second overhead is configured per-layer, or configured per-rank.

28. The method according to claim 20, wherein the first CSI comprises first indication information and second indication information, the first indication information is configured to indicate a quantity of non-zero values in the PMC, and the second indication information is configured to indicate positions of the non-zero values.

29. The method according to claim 20, further comprising:
sending, by the network device, second configuration information to the terminal, wherein the second configuration information is configured to configure an uplink resource of the terminal for transmitting the first part and/or the second part.

30. The method according to claim 29, wherein the uplink resource is further configured to indicate a third overhead for transmitting the first part and/or the second part.

31. The method according to claim 29, wherein the uplink resource comprises a physical uplink control channel PUCCH and a physical uplink shared channel PUSCH, the PUCCH or the PUSCH is configured to transmit the first part, and the PUSCH is configured to transmit the second part.

32. The method according to any one of claims 20 to 31, wherein the first part and the second part are independently decoded.

33. The method according to any one of claims 20 to 31, wherein a time domain position of the first part and a time domain position of the second part on an uplink resource are determined according to a mapping rule.

34. The method according to any one of claims 20 to 31, wherein a priority of the first part is higher than a priority of the second part.

35. The method according to any one of claims 20 to 31, wherein the first part is periodic or semi-static; and
the second part is semi-static or aperiodic.

36. The method according to any one of claims 20 to 31, wherein, the PMC comprises at least one of:
feature vector information;
precoding matrix information; or
codebook indication information based on a specific codebook.

37. A terminal, comprising:
a transceiver module, configured to send first CSI to a network device according to a first reference signal, wherein the first CSI at least comprises a precoding matrix code PMC processed based on a model and a rank indication RI;
wherein the transceiver module is further configured to send second CSI to the network device according to a second reference signal, wherein the second CSI at least comprises a channel quality indicator CQI.

38. A network device, comprising:
a transceiver module, configured to receive first CSI sent by a terminal, wherein the first CSI at least comprises a PMC processed based on a model and an RI;
wherein the transceiver module is further configured to receive second CSI sent by the terminal, wherein the second CSI at least comprises a CQI.

39. A terminal, comprising:
one or more processors;
wherein the terminal is configured to perform the method according to any one of claims 1-18.

40. A network device, comprising:
one or more processors;
wherein the network device is configured to perform the method according to any one of claims 19-36.

41. A communication system, comprising a terminal and a network device, wherein,
the terminal is configured to implement the method according to any one of claims 1-18; and
the network device is configured to implement the method according to any one of claims 19-36.

42. A storage medium, wherein the storage medium stores instructions, wherein,
when the instructions are executed on a communication device, the communication device is configured to perform the method according to any one of claims 1-18 or any one of claims 19-36.
